# EUROPEAN PATENT SPECIFICATION

(11) **EP 2 896 554 B1**
(45) Date of publication and mention of the grant of the patent: **15.03.2017**
(21) Application number: 14151492.7
(22) Date of filing: 16.01.2014
(51) Int. Cl.: B62L 3/08, B60T 8/26

(54) **Auxiliary device for hydraulic brake assembly**
Zusatvorrichtung für eine hydraulische Bremsanordnung
Dispositif auxiliaire pour ensemble de frein hydraulique

(43) Date of publication of application: 22.07.2015
(73) Proprietor: Ansure, Inc., New Taipei City 242 (TW)
(72) Inventor: Tseng, Ton-Rong, New Taipei City 242 (TW)
(74) Representative: Lang, Christian

(56) References cited:
- EP-A1- 2 639 123
- JP-A- 2000 280 886
- US-A1- 2003 201 667

## Description

### BACKGROUND OF THE INVENTION

### (1) FIELD OF THE INVENTION

The present invention relates to an auxiliary device for a brake assembly, and more particularly, to auxiliary device for a hydraulic brake assembly of a two-wheel vehicle to simultaneously activate the front and rear wheel brake units and control the difference of the braking pressures of the front and rear wheels.

### (2) DESCRIPTION OF RELATED ART

For two-wheel vehicles, such as bicycles or motorbikes, are used widely as a convenient transportation tool. In order to increase the efficiency of braking feature, the hydraulic brake assembly is developed and becomes the main trend of the brake systems.

The conventional brake assembly for two-wheel vehicles uses the left brake lever and the right brake lever to respectively brake the front wheel and the rear wheel. However, some of the riders may brake the front wheel or the rear wheel too much so that the front or rear wheel is locked when in urgent situations, this situation may cause the rider and the bicycle to flip over or slip aside, and the rider or people beside the rider may be injured. Preferably, when braking the bicycle, the rear wheel is first braked and the front wheel is then braked. Preferably, 30% of the braking force is applied to the front wheel and 70% of the braking force is applied to the rear wheel.

The hydraulic brake assembly has higher efficiency than the conventional brake assembly, especially for those high-end bicycles and motorbikes, a reliable and high performance brake assembly is required, However, when in urgent situations, such as moving downward at high speed, the improper operation to the hydraulic brake assembly, such as the braking force to the rear wheel is larger than that to the front wheel, may cause damage to the bicycle or motorbike, and the rider.

From document US 2003 / 02101667 A1 a hydraulic balanced braking system for bicycles or motorcycles is known, comprising two hydraulic brakes and an oil pressure balance unit. The oil pressure balance unit is placed between the pressure cylinders and the brake cylinders of the hydraulic brakes. The oil pressure balance unit comprises a housing with an oil chamber with two inlet and two outlet terminals formed on two opposite sides of the housing and two primary pressure cylinders and two secondary pressure cylinders arranged inside the oil chamber. The primary pressure cylinders are arranged in the oil chamber adjacent to the inlet terminals while the secondary pressure cylinders are arranged adjacent to the outlet

terminals, such that an actuation of the brake levers leads to a driving of the primary pressure cylinders in downward direction which consequently drive the secondary cylinders to press the oil out of the oil pressure balance unit into the brake cylinders of the brakes connected to the outlet terminals of the oil pressure balance unit to actuate the brakes. The secondary pressure cylinders are connected to each other and can only move together as one single pressure cylinder, such that an actuation of any brake lever and the respective driving of the corresponding first pressure cylinder leads to a simultaneous actuation of both secondary pressure cylinders, with the effect that both brake cylinders of rear and front brake are activated with identical braking powers, respectively.

The present invention intends to provide an auxiliary device for a hydraulic brake assembly which improves the shortcomings mentioned above

### SUMMARY OF THE INVENTION

The present invention relates to an auxiliary device for a hydraulic brake assembly and comprises a body having four cylinders located between the top and the bottom thereof, each of the four cylinders has a movable unit. The movable unit has its first end located in the cylinder, and
the second end protruding beyond the first end of the cylinder and each of the movable units is movable relative to the cylinder axially. A transmission
device is disposed on the body and has two driving ends and two passive ends, the two driving ends and the two passive ends are respectively located on movement tracks of the four movable units and contact the four movable units. When the movable unit drives one of the driving ends located corresponding thereto, the two movable units located corresponding to the passive ends are moved by the transmission device.

Preferably, the movable unit has a piston and a piston rod. The piston is movably located in the cylinder corresponding thereto, and the piston rod has the first end thereof connected to the piston, and the second end protruding beyond the first end of the cylinder and contacting one of the driving ends, or one of the passive ends of the transmission device. By the cooperation of the pistons and the piston rods, the present invention can control the braking actions.

Preferably, the left brake lever hose and the right brake lever hose are respectively connected to two respective second ends of the cylinders located corresponding to the two driving ends. The front wheel brake hose and the rear wheel brake hose are respectively connected to two respective second ends of the cylinders located corresponding to the two passive ends.

Preferably, the diameter of the cylinder connected to the rear wheel brake hose is larger than the diameter of the cylinder connected with the front wheel brake hose.

Preferably, the piston rods protruding from the cylinders are located on one side of the body, and a connection portion is connected to the side of the body so as to be connected with the transmission device.

Preferably, the transmission device has a positioning rod, a first link and a second link. The positioning rod extends through the connection portion and is rotatable along the axis thereof. The first and second links respectively extend through the positioning rods. The two driving ends are located on two respective first ends of the first and second links, the two passive ends are located on two respective second ends of the first and second links.

Preferably, the transmission device has a positioning rod, a first link and a second link. The central portion of the positioning rod is connected to the connection portion. Two ends of the positioning rod are rotatable about the connection portion. The first and second links are respectively connected to the two ends of the positioning rod. The two driving ends are located on two ends of the first link. The two passive ends are located on two ends of the first and second link.

Preferably, the piston rods that are located corresponding to the two driving ends protrude from the first side of the body. The piston rods that are located corresponding to the two passive ends protrude from the second side of the body. The transmission device extends through the body, and the two driving ends and the two passive ends are respectively located on two opposite sides of the body.

Preferably, the transmission device has a positioning rod, a first link and a second link. The positioning rod extends through the body. The first and second links are respectively connected to two ends of the positioning rods. The two driving ends are located on two ends of the first link. The two passive ends are located on two ends of the second links.

The primary object of the present invention is to provide an auxiliary device for a hydraulic brake assembly. The front and wheel are braked by either pulling the left brake lever or the right brake lever.

Another object of the present invention is to provide an auxiliary device for a hydraulic brake assembly, wherein the force applied to the rear wheel is always larger than that to the front wheel.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the auxiliary device of the present invention;
Fig. 2 shows the inside arrangement of the auxiliary device of the present invention;
Fig. 3 is a top view to show the arrangement of the auxiliary device of the present invention;
Fig. 4 is two cross sectional views respectively taking along lines A-A' and B-B' in Fig. 3, wherein no action is taken;
Fig. 5 is two cross sectional views respectively taking along lines A-A' and B-B' in Fig. 3, wherein the left brake lever is operated;
Fig. 6 is two cross sectional views respectively taking along lines A-A' and B-B' in Fig. 3, wherein the right brake lever is operated;
Fig. 7 is a top view to show the arrangement of the second embodiment of the auxiliary device of the present invention;
Fig. 8 is two cross sectional views respectively taking along lines C-C' and D-D' in Fig. 7, wherein no action is taken;
Fig. 9 is two cross sectional views respectively taking along lines C-C' and D-D' in Fig. 7, wherein the left brake lever is operated;
Fig. 10 is two cross sectional views respectively taking along lines C-C' and D-D' in Fig. 7, wherein the right brake lever is operated;
Fig. 11 shows the arrangement of the third embodiment of the auxiliary device of the present invention;
Fig. 12 is a top view to show the arrangement of the third embodiment of the auxiliary device of the present invention;
Fig. 13 is two cross sectional views respectively taking along lines E-E' and F-F' in Fig. 11, wherein no action is taken;
Fig. 14 is two cross sectional views respectively taking along lines E-E' and F-F' in Fig. 11, wherein the left brake lever is operated, and
Fig. 15 is two cross sectional views respectively taking along lines E-E' and F-F' in Fig. 11, wherein the right brake lever is operated.

### DETAILED DESCRIPTION OF THE PREFERRED EMBODIMENT

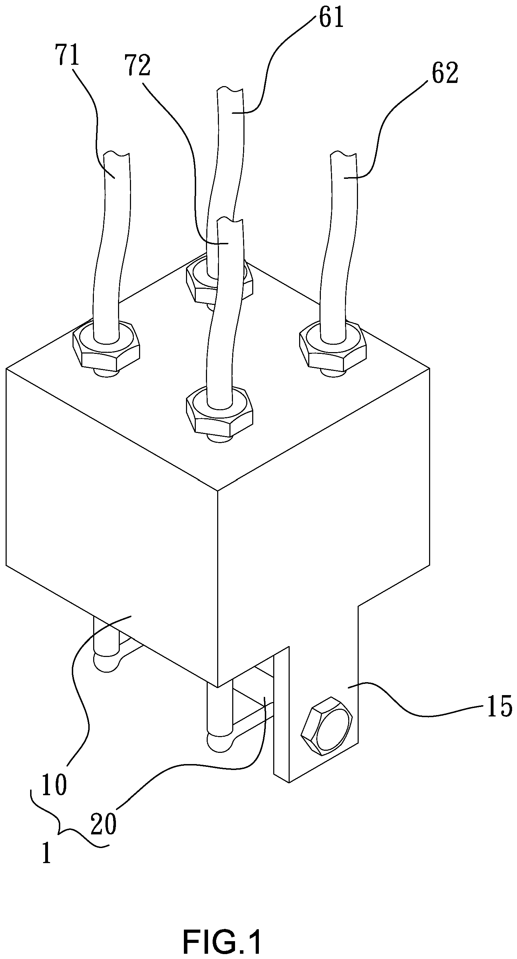

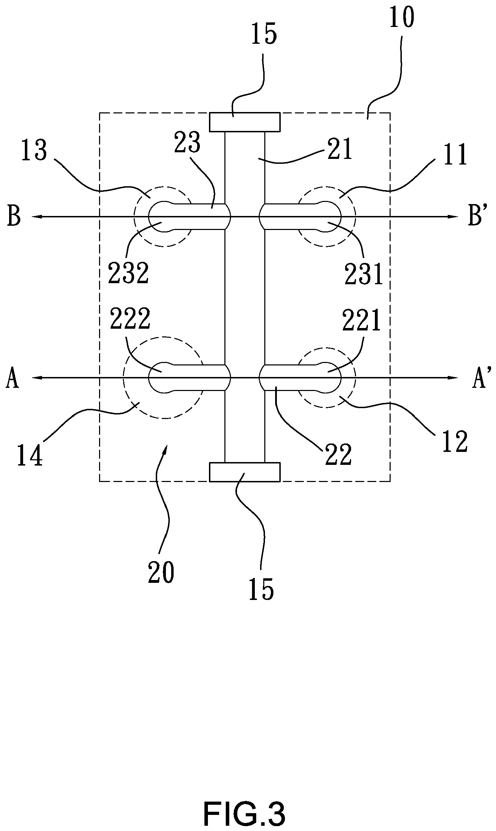

Referring to Figs. 1 to 6, the auxiliary device 1 of a hydraulic brake assembly for two-wheel vehicles of the present invention is connected to the left brake lever hose 61, the right brake lever hose 62, the front wheel brake hose 71 and the rear wheel brake hose 72 of the two-wheel vehicle. The auxiliary device 1 comprises a body 10 and a transmission device 20.

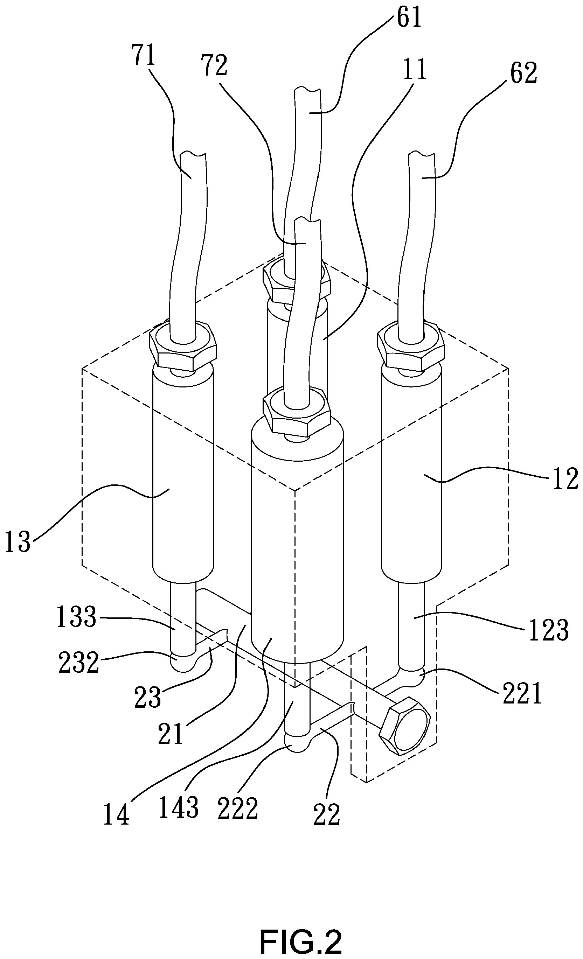

As shown in Figs. 2 to 4, the body 10 is a rectangular body and has four cylinders 11, 12, 13, 14 located between the top and the bottom thereof. The four cylinders 11, 12, 13, 14 are respectively connected to the left brake lever hose 61, the right brake lever hose 62, the front wheel brake hose 71
and the rear wheel brake hose 72. Each of the four cylinders 11, 12, 13, 14 has a movable unit 111/121/131/141 which has a first end located in the cylinder 11/12/13/14 corresponding thereto, and a second end protruding beyond the first end of the cylinder 11/12/13/14 corresponding thereto. Each of the movable units 111, 121, 131, 141 is movable relative to the cylinder 11/12/13/14 corresponding thereto axially. The movable unit 111/121/131/141 has a piston 112/122/132/142 and a piston rod 113/123/133/143. The piston 112/122/132/142 is movably located in the cylinder 11/12/13/14 corresponding thereto, and the piston rod 113/123/133/143 has a first end connected to the piston 112/122/132/142, and a second end protruding beyond the first end of the cylinder 11/12/13/14.

The transmission device 20 is connected to the connection portion 15 on the bottom of the body 10, and comprises a positioning rod 21, a first link 22 and a second link 23. The positioning rod 21 extends through the connection portion 15 and is rotatable along the axis thereof. The first and second links 22, 23 respectively extend through the positioning rod 21, and are rotatable with the positioning rod 21. A driving end 221 and a passive end 222 are connected to the two ends of the first link 22, and are respectively located on the two movement tracks of the two piston rods 123, 143 connected to the two cylinders 12, 14 which are connected to the right brake lever hose 62 and the rear wheel brake hose 72. The other driving end 231 and the other passive end 232 are connected to the two ends of the second link 23, and are respectively located on the two movement tracks of the two piston rods 113, 133 connected to the two cylinders 11, 13 which are connected to the left brake lever hose 61 and the front wheel brake hose 71.

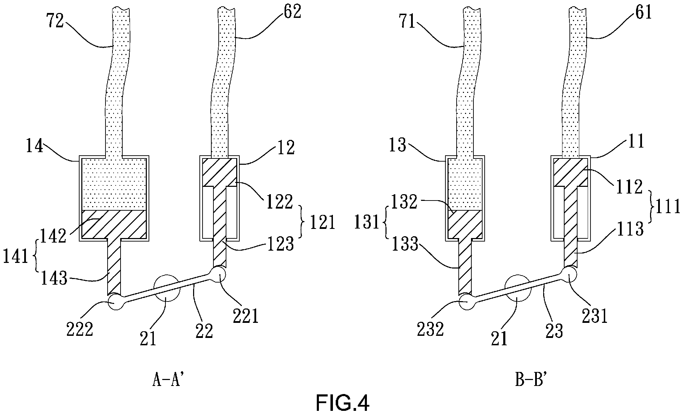

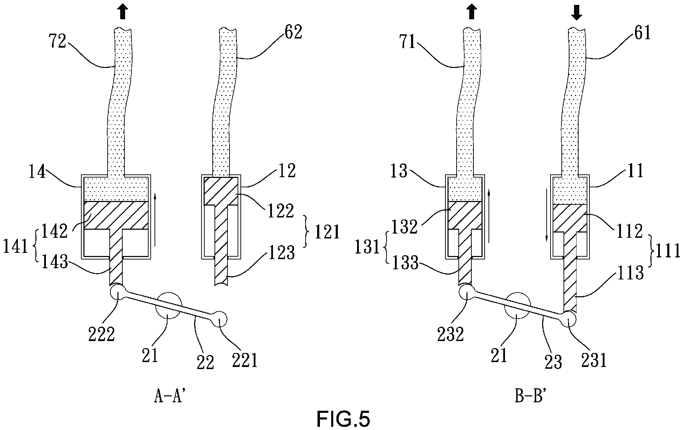

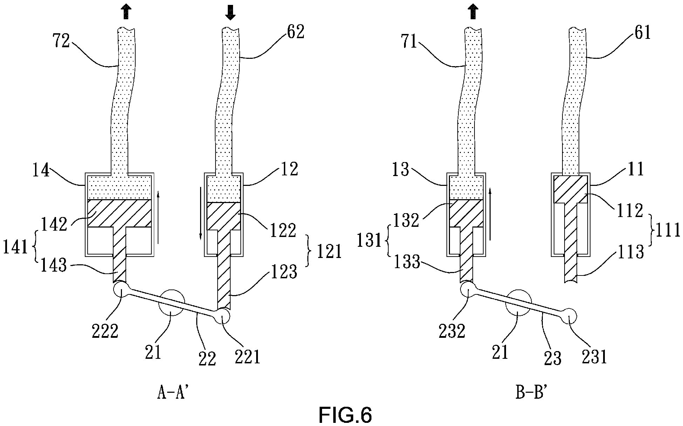

When the left and right brake lever hoses 61, 62 are not in action as shown in Fig. 4, the driving ends 221, 231 contact the piston rods 123, 113, and the passive ends 222, 232 contact the piston rods 143, 133. When only the left brake lever is pulled as shown in Fig. 5, the piston 112 and the piston rod 113 of the cylinder 11 are driven via the hydraulic power from the left brake lever hose 61, the second link 23 is pushed by the driving end 231 and the positioning rod 21 is rotated so as to drive the passive end 232 to push the piston rod 133. In the meanwhile, the first link 22 is activated by the positioning rod 21, and is rotated along with the second link 23 so that the passive end 222 pushes the piston rod 143. The two piston rods 133, 143 move the pistons 132, 142 to drive the front wheel brake unit and the rear wheel brake unit via the front and rear wheel brake hoses 71, 72. Similarly, when only the right brake lever is pulled as shown in Fig. 6, the first link 22 rotates the positioning rod 21 and drives the second link 23 so as to drive the front wheel brake unit and the rear wheel brake unit via the front and rear wheel brake hoses 71, 72.

The present invention is easily operated and can activate the front wheel brake unit and the rear wheel brake unit by either pulling the left or right brake lever.

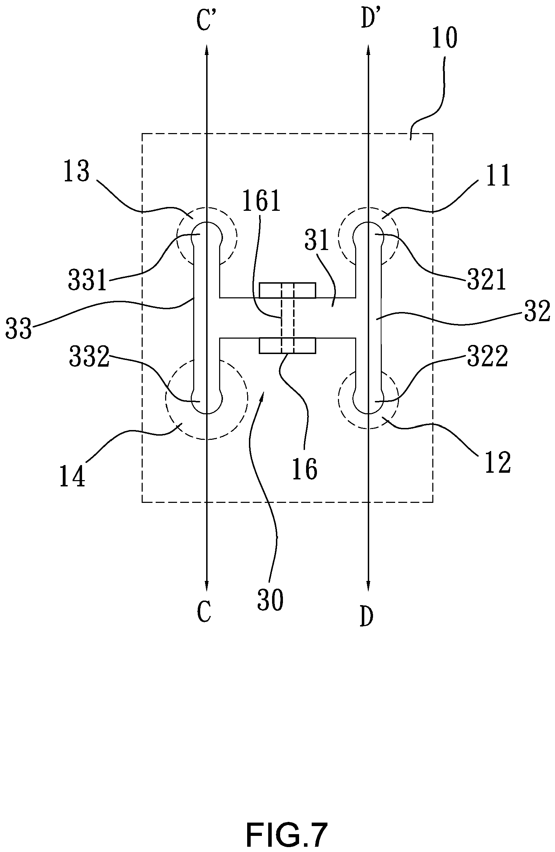

As shown in Figs. 7 to 10, by different connection between the parts of the present invention, the same function is achieved. The transmission device 20 is replaced by the transmission device 30 which has a positioning rod 31, a first link 32 and a second link 33. The central portion of the positioning rod 31 is connected to the connection portion 16 located at the bottom of the body 10 and is secured by a positioning shaft 161, so that the positioning rod 31 is rotatable about the positioning shaft 161. The first and second links 32, 33 are respectively connected to the two ends of the positioning rod 31. The two driving ends 321, 322 are located on two ends of the first link 32 and located on the movement tracks of the two protruding piston rods 113, 123. The two passive ends 331, 332 are located on two ends of the second link 33, and located on the movement tracks of the two protruding piston rods 133, 143.

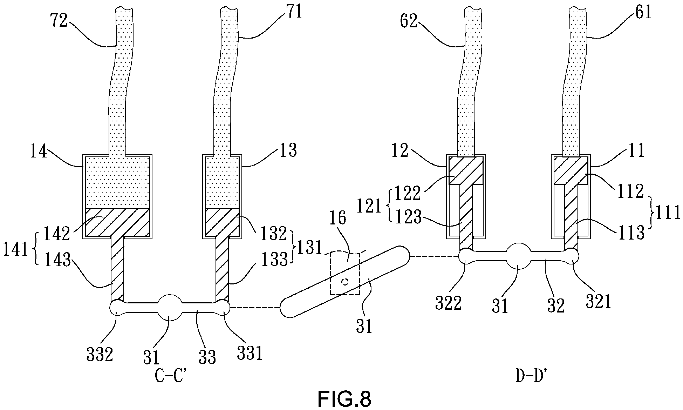

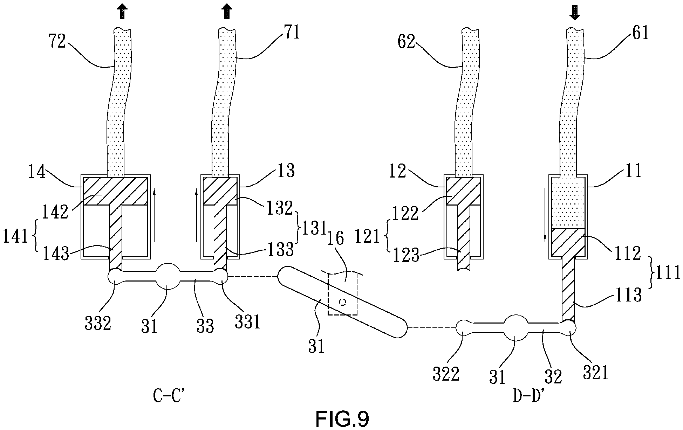

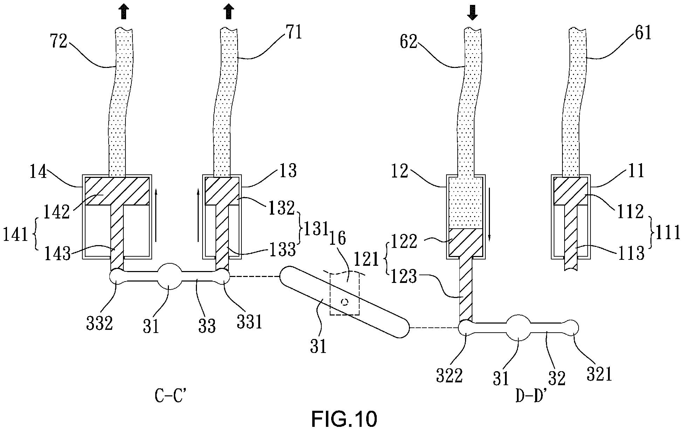

As shown in Figs. 8 to 10, when no braking action is taken, as shown in Fig. 8, two driving ends 321, 322 and the passive ends 331, 332 respectively contact the piston rods 113, 123, 133, 143. When only the left brake lever is pulled as shown in Fig. 9, the piston 112 and the piston rod 113 of the cylinder 11 are driven via the hydraulic power from the left brake lever hose 61, the first link 32 is pushed by the driving end 321 and the first link 32 is moved downward, the positioning rod 31 is rotated about the connection portion 16 so that the second link 33 on the opposite side of the positioning rod 31 moves upward. The two passive ends 331, 332 simultaneously push the piston rods 133, 143 and the two pistons 132, 142 so as to drive the front wheel brake unit and the rear wheel brake unit via the front and rear wheel brake hoses 71, 72. Similarly, when only the right brake lever is pulled as shown in Fig. 10, the piston 122 and the piston rod 123 of the cylinder 12 are driven via the hydraulic power from the right brake lever hose 62. The first link 32 is moved downward and the second link 33 on the other end of the positioning rod 31 is moved upward. The two passive ends 331, 332 simultaneously push the piston rods 133, 143 and the two pistons 132, 142 so as to drive the front wheel brake unit and the rear wheel brake unit via the front and rear wheel brake hoses 71, 72.

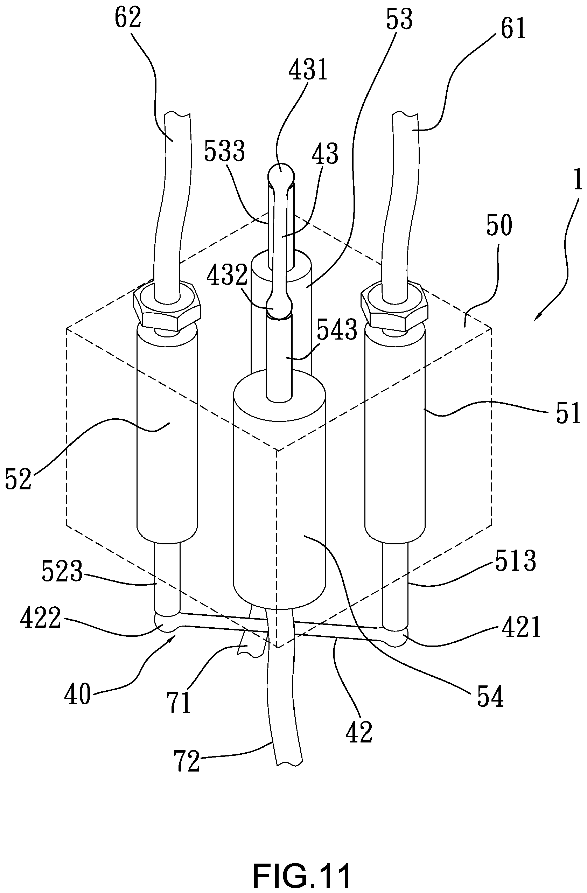

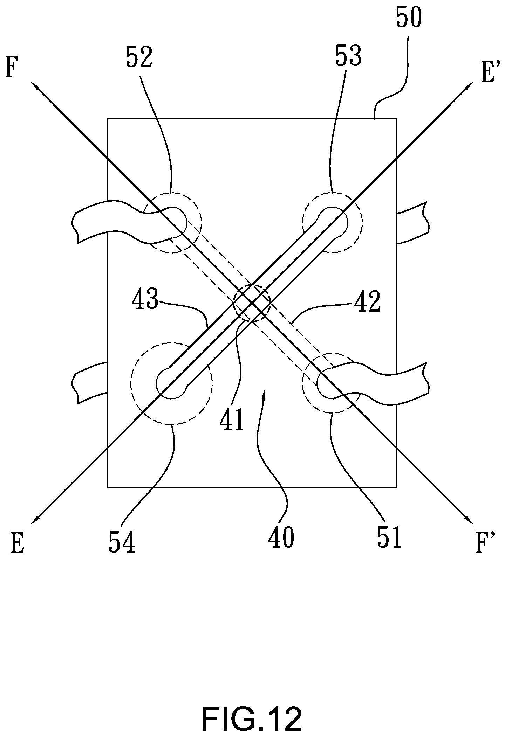

In the previous embodiment, the left and right brake lever hoses 61, 62 and the front and rear wheel brake hoses 71, 72 is

connected to the same side of the body 10, by the cooperation of the transmission devices 20, 30 on the other side of the body 10, using the leverage principle, when the driving ends 221(231), 321(322) is moved downward, the two passive ends 222, 232, 331, 332 are moved upward by the positioning rods 21, 31 to achieve the safe braking action. The four hoses are connected to the same side of the body 10 and this is difficult when installed to the vehicle. The applicant further provides an improved arrangement as shown in Figs. 11 to 15, the left and right brake lever hoses 61, 62 and the front and rear wheel brake hoses 71, 72 are respectively connected to the two opposite sides of the body 50, which is more convenient when in use.

As shown in Figs. 11 to 13, the third embodiment of the auxiliary device 1 of the present invention comprises a body 50 and a transmission device 40, wherein the body 50 is a rectangular body and has four cylinders 51, 52, 53, 54 located between the top and the bottom thereof. The two cylinders 51, 52 on the top of the body 50 are connected to the left and right brake lever hoses 61, 62, and the other two cylinders 53, 54 on the bottom of the body 50 are connected to the front and rear wheel brake hoses 71, 72. Each of the cylinders 51, 52, 53, 54 has a movable unit 511/521/531/541 which has a piston 512/522/532/542 and a piston rod 513/523/533/543. The piston 512/522/532/542 is movably located in the cylinder 51/52/53/54 corresponding thereto. The piston rod 513/523/533/543 is connected to the piston 512/522/532/542 correspondingly and protrudes beyond the cylinder 51/52/53/54 corresponding thereto and located in opposite to the hose. The piston rods 513, 523 of the cylinders 51, 52 that are connected to the left and right brake lever hoses 61, 62, extend beyond the bottom of the body 50. The piston rods 533, 543 of the cylinders 53, 54 that are connected to the front and rear wheel brake hoses 71, 72, extend beyond the top of the body 50.

The transmission device 40 of the embodiment has a positioning rod 41, a first link 42 and a second link 43. The positioning rod 41 extends through the body 50 and the two ends of the positioning rod 41 respectively extend beyond the top and bottom of the body 50. The two ends of the positioning rod 41 are respectively connected to the first and second links 42, 43. The two driving ends 421, 422 are located on the two ends of the first link 42 and located on the movement tracks of the two protruding piston rods 513, 523. The two passive ends 431, 432 are located on the two ends of the second link 43, and located on the movement tracks of the two protruding piston rods 533, 543.

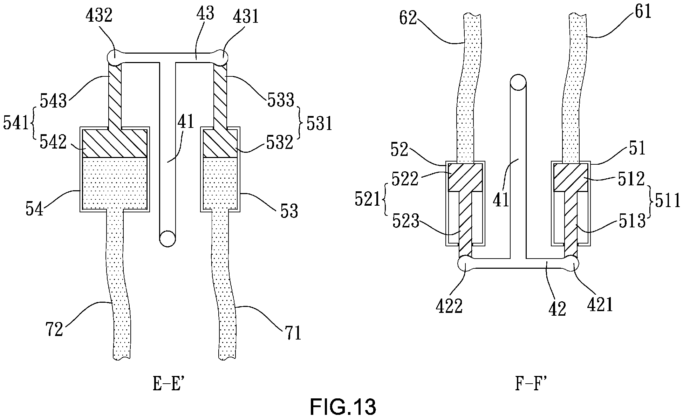

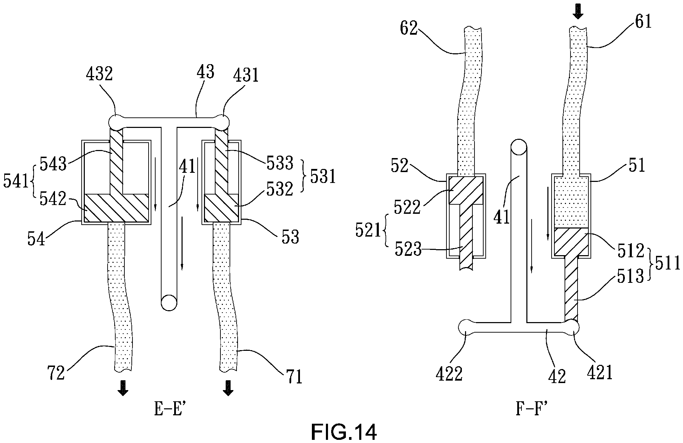

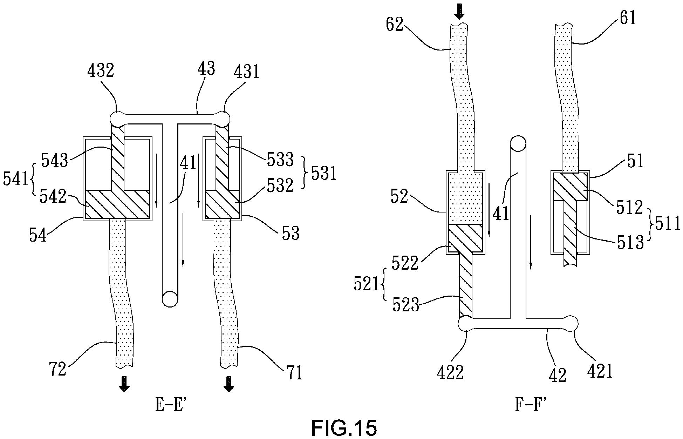

As shown in Figs. 13 to 15, when no braking action is taken, as shown in Fig. 13, two driving ends 421, 422 and the passive ends 431, 432 respectively contact the piston rods 513, 523, 533, 543. When only the left brake lever is pulled as shown in Fig. 14, the piston 512 and the piston rod 513 of the cylinder 51 are driven via the hydraulic power from the left brake lever hose 61, the first link 42 is pushed by the driving end 421 and the first link 42 is moved downward, the positioning rod 41 and the second link 43 are moved downward. The two passive ends 431, 432 simultaneously push the piston rods 533, 543 and the two pistons 532, 542 so as to drive the front wheel brake unit and the rear wheel brake unit via the front and rear wheel brake hoses 71, 72. Similarly, when only the right brake lever is pulled as shown in Fig. 15, the piston 522 and the piston rod 523 of the cylinder 52 are driven via the hydraulic power from the right brake lever hose 62. The first link 42 is moved downward, and the positioning rod 41 and the second link 43 are moved downward. The two passive ends 431, 432 simultaneously push the piston rods 533, 543 and the two pistons 532, 542 so as to drive the front wheel brake unit and the rear wheel brake unit via the front and rear wheel brake hoses 71, 72.

For each of the embodiments, the driving ends 221, 231, 321, 322, 421, 422 are located in the cylinders 12, 11, 11, 12, 51, 52 which has limited amount or even no hydraulic oil when the brake lever is not pulled. In the cylinders 14, 13, 13, 14, 53, 54 corresponding to the passive ends 222, 232, 331, 332, 431, 432, the hydraulic oil is full to have the best status for the braking actions.

For the auxiliary device 1 of the present invention, the front and wheel are braked by either pulling the left brake lever or the right brake lever. In detail, the front wheel brake unit and the rear wheel brake unit are simultaneously activated by pulling either the left brake lever or the right break lever. By using different sizes of the front wheel brake unit and the rear wheel brake unit, preferably, the front wheel is braked right after the rear wheel is braked. The braking force applied to the rear wheel is larger than that to the front wheel. In the embodiments, the diameters of the cylinders 14, 54 connected to the rear wheel brake hose 72 are larger than those of the diameters of the cylinders 13, 53 connected to the front wheel brake hose 71, this is helpful for the control to the vehicle when the rider brakes the vehicle.

While we have shown and described the embodiment in accordance with the present invention, it should be clear to those skilled in the art that further embodiments may be made without departing from the scope of the present invention as laid down in the appended claims.

## Claims

1. An auxiliary device (1) for a hydraulic brake assembly, comprising:
a body (10, 50) having four cylinders (11, 12, 13, 14, 51, 52, 53, 54) located between a top and a bottom thereof, each of the four cylinders (11, 12, 13, 14, 51, 52, 53, 54) having a movable unit (111, 121, 131, 141, 511, 521, 531, 41), each of the movable units (111, 121, 131, 141, 511, 521, 531, 541) having a first end located in the cylinder (11, 12, 13, 14, 51, 52, 53, 54) corresponding thereto and a second end protruding beyond a first end of the cylinder (11, 12, 13, 14, 51, 52, 53, 54) corresponding thereto, and each of the movable units (111, 121, 131, 141, 511, 521, 531, 541) movable relative to the cylinder (11, 12, 13, 14, 51, 52, 53, 54) corresponding thereto axially,
a transmission device (20, 30, 40) disposed on the body (10, 50) and having two driving ends (221, 231, 321, 322, 421, 422) and two passive ends (222, 232, 331, 332, 431, 432), the two driving ends (221, 231, 321, 322, 421, 422) and the two passive ends (222, 232, 331, 332, 431, 432) respectively located on movement tracks of the four movable units (111, 121, 131, 141, 511, 521, 531, 541) and contacting the four movable units (111, 121, 131, 141, 511, 521, 531, 541), and
when the movable unit (111, 121, 131, 141, 511, 521, 531, 541) drives one of the driving ends (221, 231, 321, 322, 421, 422) located corresponding thereto, the two movable units (111, 121, 131, 141, 511, 521, 531, 541) located corresponding to the passive ends (222, 232, 331, 332, 431, 432) are moved by the transmission device (20, 30, 40).

2. The device (1) as claimed in claim 1, wherein the movable unit (111, 121, 131, 141, 511, 521, 531, 541) has a piston (112, 122, 132, 143, 513, 522, 532, 542) and a piston rod (113, 123, 133, 143, 513, 523, 533, 543), the piston (112, 122, 132, 143, 513, 522, 532, 542) is movably located in the cylinder (11, 12, 13, 14, 51, 52, 53, 54) corresponding thereto, the piston rod (113, 123, 133, 143, 513, 523, 533, 543) has a first end connected to the piston (112, 122, 132, 143, 513, 522, 532, 542), and a second end protruding beyond the first end of the cylinder (11, 12, 13, 14, 51, 52, 53, 54) and contacting one of the driving ends (221, 231, 321, 322, 421, 422) or one of the passive ends (222, 232, 331, 332, 431, 432) of the transmission device (20, 30, 40).

3. The device (1) as claimed in claim 2, wherein a left brake lever hose (61) and a right brake lever hose (62) are respectively connected to two respective second ends of the cylinders (11, 12, 13, 14, 51, 52, 53, 54) located corresponding to the two driving ends (221, 231, 321, 322, 421, 422), a front wheel brake hose (71) and a rear wheel brake hose (72) are respectively connected to two respective second ends of the cylinders (11, 12, 13, 14, 51, 52, 53, 54) located corresponding to the two passive ends (222, 232, 31, 332, 431, 432).

4. The device (1) as claimed in claim 3, wherein a diameter of the cylinder (11, 12, 13, 14, 51, 52, 53, 54) connected to the rear wheel brake hose (72) is larger than a diameter of the cylinder (11, 12, 13, 14, 51, 52, 53, 54) connected with the front wheel brake hose (71).

5. The device (1) as claimed in claim 4, wherein the piston rods (113, 123, 133, 143, 513, 523, 533, 543) protruding from the cylinders (11, 12, 13, 14, 51, 52, 53, 54) are located on one side of the body (10, 50), a connection portion (15, 16) is formed on the side of the body (10, 50) so as to be connected with the transmission device (20, 30, 40).

6. The device (1) as claimed in claim 5, wherein the transmission device (20, 30, 40) has a positioning rod (21, 31, 41), a first link (22, 32, 42) and a second link (23, 33, 43), the positioning rod (21, 31, 41) extends through the connection portion (15, 16) and is rotatable along an axis thereof, the first and second links (22, 32, 42, 23, 33, 43) respectively extend through the positioning rod (21, 31, 49), the two driving ends (221, 231, 321, 322, 421, 422) are located on two respective first ends of the first and second links (22, 32, 42, 23, 33, 43), the two passive ends (222, 232, 331, 332, 431, 432) are located on two respective second ends of the first and second links (22, 32, 42, 23, 33, 43).

7. The device (1) as claimed in claim 5, wherein the transmission device (20, 30, 40) has a positioning rod (21, 31, 41), a first link (22, 32, 42) and a second link (23, 33, 43), a central portion of the positioning rod (21, 31, 41) is connected to the connection portion (15, 16), two ends of the positioning rod (21, 31, 41) are rotatable about the connection portion (15, 16), the first and second links (22, 32, 42, 23, 33, 43) are respectively connected to the two ends of the positioning rod (21, 31, 41), the two driving ends (221 231, 321, 322, 421, 422) are located on two ends of the first link (22, 32, 42), the two passive ends (222, 232, 331, 332, 431, 432) are located on two ends of the second link (23, 33, 43).

8. The device (1) as claimed in claim 4, wherein the piston rods (113, 123, 133, 143, 513, 523, 533, 543) that are located corresponding to the two driving ends (221, 231, 321, 322, 421, 422) protrude from a first side of the body (10, 50), the piston rods (113, 123, 133, 143, 513, 523, 533, 543) that are located corresponding to the two passive ends (222, 232, 331, 332, 431, 432) protrude from a second side of the body (10, 50), the transmission device (20, 30, 40) extends through the body (10, 50), and the two driving ends (221, 231, 321, 322, 421, 422) and the two passive ends (222, 232, 331, 332, 431, 432) are respectively located on two opposite sides of the body (10, 50).

9. The device (1) as claimed in claim 8, wherein the transmission device (20, 30, 40) has a positioning rod (21, 31, 41), a first link (22, 32, 42) and a second link (23, 33, 43), the positioning rod extends through the body (10, 50), the first and second links (22, 32, 42, 23, 33, 43) are respectively connected to two ends of the positioning rod (21, 31, 41), the two driving ends (221, 231, 321, 322, 421, 422) are located on two ends of the first link (22, 32, 42), the two passive ends (222, 232, 331, 332, 431, 432) are located on two ends of the second link (23, 33, 43).

10. The device (1) as claimed in claim 3, wherein a diameter of the cylinder (11, 12, 13, 14, 51, 52, 53, 54) connected to the rear wheel brake hose (72) is larger than a diameter of the cylinder (11, 12, 13, 14, 51, 52, 53, 54) connected with the front wheel brake hose (71).

11. The device (1) as claimed in claim 10, wherein the piston rods (113, 123, 133, 143, 513, 523, 533, 543) protruding from the cylinders (11, 12, 13, 14, 51, 52, 53, 54) are located on one side of the body (10, 50), a connection portion (15, 16) is formed on the side of the body (10, 50) so as to be connected with the transmission device (20, 30, 40).

12. The device (1) as claimed in claim 11, wherein the transmission device (20, 30, 40) has a positioning rod (21, 31, 41), a first link (22, 32, 42) and a second link (23, 33, 43), the positioning rod (21, 31, 41) extends through the connection portion (15, 16) and is rotatable along an axis thereof, the first and second links (22, 32, 42, 23, 33, 43) respectively extend through the positioning rod (21, 31, 41), the two driving ends (221, 231, 321, 322, 421, 422) are located on two respective first ends of the first and second links (22, 32, 42, 23, 33, 43), the two passive ends (222, 232, 331, 332, 431, 432) are located on two respective second ends of the first and second links (22, 32, 42, 23, 33, 43).

13. The device (1) as claimed in claim 11, wherein the transmission device (20, 30, 40) has a positioning rod (21, 31, 41), a first link (22, 32, 42) and a second link (23, 33, 43), a central portion of the positioning rod (21, 31, 41) is connected to the connection portion (15, 16), two ends of the positioning rod (21, 31, 41) are rotatable about the connection portion (15, 16), the first and second links (22, 32, 42, 23, 33, 43) are respectively connected to the two ends of the positioning rod (21, 31, 41), the two driving ends (221, 231, 321, 322, 421, 422) are located on two ends of the first link (22, 32, 42), the two passive ends (222, 232, 331, 332, 431, 432) are located on two ends of the second link (23, 33, 43).

14. The device (1) as claimed in claim 10, wherein the piston rods (113, 123, 133, 143, 513, 523, 533, 543) that are located corresponding to the two driving ends (221, 231, 321, 322, 421, 422) protrude from a first side of the body (10, 50), the piston rods (113, 123, 133, 143, 513, 523, 533, 543) that are located corresponding to the two passive ends (222, 232, 331, 332, 431, 432) protrude from a second side of the body (10, 50), the transmission device (20, 30, 40) extends through the body (10, 50), and the two driving ends (221, 231, 321, 322, 421, 422) and the two passive ends (222, 232, 331, 332, 431, 432) are respectively located on two opposite sides of the body (10, 50).

15. The device (1) as claimed in claim 14, wherein the transmission device (20, 30, 40) has a positioning rod (21, 31, 41), a first link (22, 32, 42) and a second link (23, 33, 43), the positioning rod (21, 31, 41) extends through the body (10, 50), the first and second links (22, 32, 42, 23, 33, 43) are respectively connected to two ends of the positioning rod (21, 31, 41), the two driving ends (221, 231, 321, 322, 421, 422) are located on two ends of the first link (22, 32, 42), the two passive ends (222, 232, 331, 332, 431, 432) are located on two ends of the second link (23, 33, 43).

## Patentansprüche

1. Hilfsvorrichtung (1) für eine hydraulische Bremsenanordnung, umfassend:
einen Körper (10,50), der vier Zylinder(11.12, 13, 14, 51, 52, 53, 54) aufweist, die zwischen einem Oberseite und einem Boden des Körpers ausgebildet sind, wobei jeder der vier Zylinder (11, 12, 13, 14, 15, 51, 52, 53, 54) eine bewegbare Einheit (111,121,131,141, 511, 521, 531, 541) aufweiset, wobei die bewegbaren Einheiten (111,121,131,141,511, 521, 531, 541) ein erstes Ende, das in dem entsprechenden Zylinder (11, 12, 13, 14, 51, 52, 53, 54) angeordnet ist, und ein zweites Ende aufweisen, das über das erste Ende des entsprechenden Zylinders (11, 12, 13, 14, 51, 52, 53, 54) hervorsteht, und wobei jede der bewegbaren Einheiten (111,121,131,141, 511, 521, 531, 541) relativ zu dem entsprechenden Zylinder (11, 12, 13, 14, 15, 51, 52, 53, 54) axial bewegbar ist,
eine Übertragungseinrichtung (20, 30, 40), die an dem Körper (10, 50) ausgebildet ist und zwei Antriebsenden (221, 231, 321, 322, 421, 422) und zwei passive Enden (222, 232, 331, 332, 431, 432) aufweist, wobei die zwei Antriebsenden (221, 231, 321, 322, 421, 422) und die zwei passiven Enden (222, 232, 331, 332, 431, 432) entsprechend auf den Bewegungspfaden der vier bewegbaren Einheiten (111,121,131,141, 511, 521, 531,541) angeordnet sind und die vier bewegbaren Einheiten (111, 121, 131, 141, 511, 521, 531, 541) kontaktieren, und
wobei die zwei bewegbaren Einheiten (111, 121, 131, 141, 511, 521, 531, 541), die entsprechend zu den passiven Enden (222,232, 331, 332, 431, 432) angeordnet sind, durch die Übertragungseinrichtung (20,30,40) angetrieben werden, wenn die bewegbare Einheit (111,121, 131, 141, 511, 521, 631, 541) eines der entsprechend angeordneten Antriebsenden (221, 231, 321, 322, 421, 422) antreibt,.

2. Vorrichtung (1) nach Anspruch 1, bei der die bewegbare Elnheit (111, 121, 131, 141, 511, 521, 531, 541) einen Kolben (112, 122, 132, 143, 513, 522, 532, 542) und eine Kolbenstange (113, 123, 133, 143, 513, 523, 533, 543) aufweist, wobei der Kolben (112, 122, 132,143, 513, 522, 532, 542) in dem entsprechenden Zylinder (11, 12, 13, 14, 51, 62, 53, 54) bewegbar angeordnet ist, wobei die Kolbenstange (113, 123, 133, 143, 513, 523, 533, 543) ein erstes Ende aufweist, das mit dem Kolben (112, 122, 132, 143, 513, 522, 532, 542) verbunden ist, und wobei ein zweites Ende über das erste Ende des Zylinders (11, 12, 13, 14, 15, 51, 52, 53, 54) hervorsteht und eines der Antriebsenden (221, 231, 321, 322, 421, 422) oder eines der passiven Enden (222, 232, 331, 332, 71, 432) der Übertragungseinrichtung (2, 30, 40) kontaktiert.

3. Vorrichtung (1) nach Anspruch 2, bei der ein linker Erernshebelschlauch (61) und ein rechter Bremshebelschlauch (62) entsprechend mit den jeweiligen zweiten Enden der Zylinder (11, 12, 13, 14, 15, 51, 52, 53, 54), die entsprechend an den zwei Antriebsendenden (221,231, 321,3 122,4 121,422) angeordnet sind, verbunden sind, und wobei
ein Vorderradbremsschlauch (71) und ein Hinterradbremsschlauch (72) entsprechend mit den zwei jeweiligen zweiten Enden der Zylinder (11, 12, 13, 14, 51, 52, 53, 54), die entsprechend an den zwei passiven Enden (222,2 132,3 131,3 132,4 131,432) angeordnet sind, verbunden sind.

4. Vorrichtung (1) nach Anspruch 3, bei der ein Durchmesser des Zylinders (11, 12, 13, 14, 51, 52, 53, 54), der mit dem Hinterradbremsschlauch (72) verbunden ist, größer als ein Durchmesser des Zylinders (11, 12, 13, 14, 51, 52, 53, 54) ist, der mit dem Vorderradbremsschlauch (71) verbunden ist.

5. Vorrichtung (1) nach Anspruch 4, bei der die Kolbenstangen (113, 123,133,143, 513, 523, 533, 543), die von den Zylindern (11, 12, 13, 14, 51, 52, 53, 54) abstehen, an einer Seite des Körpers (10, 50) angeordnet sind, wobei ein Verbindungsteil (15, 16) an der Seite des Körpers (10, 50) ausgebildet ist, um mit der Übertragungseinrichtung (20, 30,40) verbunden zu sein.

6. Vorrichtung (1) nach Anspruch 5, bei der die Übertragungseinrichtung (20, 30, 40) einen Positionierungsbolzen (21, 31, 41), ein erstes Verbindungsteil (22, 32, 42) und ein zweites Verbindungsteil (23, 33,43) aufweist, wobei der Positionierungsbolzen (21,31, 41) sich durch das Verbindungselement (15, 16) erstreckt und entlang einer Achse desselben rotierbar ist, wobei die ersten und zweiten Verbindungsteile (22, 32, 42, 23, 33, 43) sich jeweils durch den Positionierungsbolzen (21, 31, 41) hindurch erstrecken, wobei die zwei Antriebsenden (221, 231, 321, 322, 421, 422) an zwei entsprechenden ersten Enden der ersten und zweiten Verbindungsteile (22, 32, 42, 43, 33, 43) angeordnet sind, wobei die zwei passiven Enden (222, 232, 331, 332, 431, 432) an zwei entsprechenden zweiten Enden der ersten und zweiten Verbindurrgsteile (22, 32, 42, 43, 33, 43) angeordnet sind.

7. Vorrichtung (1) nach Anspruch 5, bei der die Übertragungseinrichtung (20, 30, 40) einen Positionierungsbolzen (21, 31, 41), ein erstes Verbindungsteil (22, 32,42) und ein zweites Verbindungsteil (23, 33, 43) aufweist, wobei ein Mittelbereich des Positionierungsbolzen (21, 31, 41) mit dem Verbindungselement (15, 16) verbunden ist, wobei zwei Enden des Positionierungsbolzens (21, 31, 41) um das Positionierungselement (15, 16) rotierbar sind, wobei die ersten und zweiten Verbindungsteile (22, 32, 42, 23, 33, 43) entsprechend mit den zwei Enden des Positionierungsbolzens (21, 31,41) verbunden sind, wobei die zwei Antriebsenden (221, 231, 321, 322, 421, 422) an den zwei Enden des ersten Verbindungsteils ( 22, 32, 42) angeordnet sind, wobei die zwei passiven Enden (222, 232, 331, 332, 431, 432) an den zwei Enden des zweiten Verbindungsteils (23, 33, 43) angeordnet sind.

8. Vorrichtung (1) nach Anspruch 4, bei der die Kolbenstangen (113,100 23,100 33,100 43,5 113,5 123,5 131,543), die den Antriebsenden (221,2 181,3 121,3 122,4121,422), entsprechend angeordnet sind, von einer ersten Seite des Körpers (10, 50) hervorstehen, wobei die Kolbenstangen (113, 123, 133, 143, 513, 523, 533, 543), die den zwei passiven Enden (222, 232, 331, 332, 431, 432), entsprechend angeordnet sind, von einer zweiten Seite des Körpers (10, 50) hervor stehen, wobei die Übertragungseinrichtung (20, 30, 40) sich durch den Körper (10, 50) hindurch erstreckt, und wobei die zwei Antriebsenden (221, 231, 321, 322, 421, 422) und die zwei passiven Enden (222, 232, 331, 332, 431, 432) entsprechend an zwei gegenüberliegenden Seiten des Körpers (10, 50) angeordnet sind.

9. Vorrichtungen (1) nach Anspruch 8, bei der die Übertragungseinrichtungen (20, 30, 40) einen Positionierungsstab (21, 31, 41), ein erstes Verbindungstell (22, 32, 42) und ein zweites Verbindungsteil (23, 33, 43) aufweist, wobei der Positionierungsstab sich durch den Körper (10, 50) hindurch erstreckt, wobei die ersten und zweiten Verbindungsteile (22,32,42, 23, 33, 43) entsprechend mit zwei Enden des Positionierungsstabs (21, 31, 41) verbunden sind, wobei die zwei Antriebsenden (221, 231, 321, 322, 421, 422) an zwei Enden des ersten Verbindungsteils (22,32, 42) angeordnet sind, und wobei die zwei passiven Enden (222, 232, 331, 332, 431, 432) an zwei Enden des zweiten Verbindungsteils (23, 33, 43) angeordnet sind.

10. Vorrichtung (1) nach Anspruch 3, bei der ein Durchmesser des Zylinders (11, 12, 13, 14, 51, 52, 53, 54), der mit dem Hinterradbremsschlauch (72) verbunden ist, größer als ein Durchmesser das Zylinders (11, 12, 13, 14, 51, 52, 53, 54) ist, der mit dem Vorderradbremsschlauch (71) verbunden ist.

11. Vorrichtung (1) nach Anspruch 10, bei der die Kolbenstangen (113, 123, 133, 143, 513, 523, 531, 543), die von den Zylindern (11, 12, 13, 14, 51, 52, 53, 54) abstehen, an einer Seite des Körpers (10, 50) angeordnet sind, wobei ein Verbindungselement (15, 16) an der Seite des Körpers (10, 50) ausgebildet ist, um mit der Übertragungseinrichtung (20, 30, 40) verbunden zu sein.

12. Vorrichtung (1) nach Anspruch 11, bei der die Übertragungseinrichtung (90, 30, 40) einen Positionierungsstab (21, 31, 41), ein erstes Verbindungsteil (22, 32, 42) und ein zweites Verbindungsteil (23, 33, 43) aufweist, wobei der Positionierungsstab (21, 31, 41) sich durch das Verbindungselement (15, 16) erstreckt und entlang einer Achse desselben rotierbar ist, wobei die ersten und zweiten Verbindungsteile (22, 32, 42, 23, 33, 43) sich jeweils durch den Positionierungsstab (21, 31, 41) hindurch erstrecken, wobei die zwei Antriebsenden (221, 231, 321, 322, 421, 422) an den zwei entsprechenden ersten Enden der ersten und zweiten Verbindungsteile (22, 32, 42, 23, 33, 43) angeordnet sind, und wobei die zwei passiven Enden (222, 232, 331, 332, 431, 432) an den zwei entsprechenden zweiten Enden der ersten und zweiten Verbindungsteile (22, 32, 42, 23, 33, 43) angeordnet sind.

13. Vorrichtung (1) nach Anspruch 11, bei der die Übertragungseinrichtungen (20, 30, 40) einen Positionierungsstab (21, 31, 41), ein erstes Verbindungsteil (22, 32, 42) und ein zweites Verbindungsteil (23, 33, 43) aufweisen, wobei ein Mittelbereich des Positionierungsstabs (21, 31, 41) mit dem Verbindungselement (15,16) verbunden ist, wobei zwei Enden des Positionierungsstabs (21, 31, 41) um das Verbindungselement (15, 16) herum rotierbar sind, wobei die ersten und zweiten Verbindungsteile (22, 32, 42, 23, 33, 43) entsprechend mit den zwei Enden des Positionierungsstabs (21, 31, 41) verbunden sind, wobei die zwei Antriebsenden (221, 231, 321, 322, 421, 422) an den zwei Enden des ersten Verbindungsteils (22, 32, 42) angeordnet sind, und wobei die zwei passiven Enden (222,232,331, 332, 431, 432) mit den zwei Enden des zweiten Verbindungsteils (23, 33, 43) verbunden sind.

14. Vorrichtung (1) nach Anspruch 10, bei der die Kolbenstange (113,100 23,100 33,100 43,5 113,5 123,5 131, 543), die an den entsprechenden zwei Antriebsendenden (221, 231, 321, 322, 71, 422) angeordnet ist, von einer ersten Seite des Körpers (10, 50) hervor steht, wobei die Kolbenstangen (113,100 23,100 33,100 43,5 113,5 123,5 131,543), die an den entsprechenden zwei passiven Enden (222, 232, 331, 332, 431, 432) angeordnet sind, von einer zweiten Seite des Körpers (10, 50) hervor stehen, wobei die Übertragungseinrichtung (20, 30, 40) sich durch den Körper (10, 50) hindurch erstreckt, und wobei die zwei Antriebsenden (221, 231, 321, 322, 421, 422) und die zwei passiven Enden (222, 232, 331, 332, 431, 432) jeweils an zwei gegenüberliegenden Seiten des Körpers (10, 50) angeordnet sind.

15. Vorrichtung (1) nach Anspruch 14, bei der die Übertragungseinrichtung (20, 30, 40) einen Positionierungsstab (21, 31, 41), ein erstes Verbindungsteil (22, 32, 42) und ein zweites Verbindungsteil (23, 33, 43) aufweist, wobei der Positionierungsstab (21, 31, 41) sich durch den Körper (10, 50) hindurch erstreckt, wobei die ersten und zweiten Verbindungsteile (22, 32,42,23, 33, 43) entsprechend an zwei Enden des Positionierungsstabs (21, 31, 41) angeordnet sind, wobei die zwei Antriebsenden (221, 231, 321, 322, 421, 422) an zwei Enden des ersten Verbindungsteil (22, 32, 42) angeordnet sind, und wobei die zwei passiven Enden (222, 232, 31, 332, 431, 432) an zwei Enden des zweiten Verbindungteils (23, 33, 43) angeordnet sind.

## Revendications

1. Dispositif auxiliaire (1) pour un ensemble de frein hydraulique comprenant :
un corps (10, 50) ayant quatre cylindres (11, 12, 13, 14, 51, 52, 53, 54) situés entre une partie supérieure et une partie inférieure de celui-ci, chacun des quatre cylindres (11, 12, 13, 14, 51, 52, 53, 54) ayant une unité mobile (111, 121, 131, 141, 511, 521, 531, 541), chacune des unités mobiles (111, 121, 131, 141, 511, 521, 531, 541) ayant une première extrémité située dans le cylindre (11, 12, 13, 14, 51, 52, 53, 54) correspondant à celui-ci et une seconde extrémité qui fait saillie au-delà d'une première extrémité du cylindre (11, 12, 13, 14, 51, 52, 53, 54) correspondant à celui-ci et chacune des unités mobiles (111, 121, 131, 141, 511, 521, 531, 541) étant mobile par rapport au cylindre (11, 12, 13, 14, 51, 52, 53, 54) qui lui correspond axialement ;
un dispositif de transmission (20, 30, 40) disposé sur le corps (10, 50) et qui a deux extrémités d'entraînement (221, 231, 321, 322, 421, 422) et deux extrémités passives (222, 232, 331, 332, 431, 432), les deux extrémités d'entraînement (221, 231, 321, 322, 421, 422) et les deux extrémités passives (222, 232, 331, 332, 431, 432) étant situées respectivement sur des pistes de mouvement des quatre unités mobiles (111, 121, 131, 141, 511, 521, 531, 541) et étant en contact avec les quatre unités mobiles (111, 121, 131, 141, 511, 521, 531, 541) et lorsque l'unité mobile (111, 121, 131, 141, 511, 521, 531, 541) entraîne l'une des extrémités d'entraînement (221, 231, 321, 322, 421, 422) situées en correspondant à celle-ci, les deux unités mobiles (111, 121, 131, 141, 511, 521, 531, 541) situées en correspondant aux extrémités passives (222, 232, 71, 332, 431, 432) sont déplacées par le dispositif de transmission (20, 30, 40).

2. Dispositif (1) selon la revendication 1, cependant que l'unité mobile (111, 121, 131, 141, 511, 521, 531, 541) a un piston (112, 122, 132, 143, 513, 522, 532, 542) et une tige de piston (113, 123, 133, 143, 513, 523, 533, 543), le piston (112, 122, 132, 143, 513, 522, 532, 542) est situé de manière mobile dans le cylindre (11, 12, 13, 14, 51, 52, 53, 54) qui lui correspond, la tige de piston (113, 123, 133, 143, 513, 523, 533, 543) a une première extrémité reliée au piston (112, 122, 132, 143, 513, 522, 532, 542) et une seconde extrémité qui fait saillie au-delà de la première extrémité du cylindre (11, 12, 13, 14, 51, 52, 53, 54) et se mettant en contact avec l'une des extrémités d'entraînement (221, 231, 321, 322, 421, 422) ou l'une des extrémités passives (222, 232, 331, 332, 431, 432) du dispositif de transmission (20, 30,40).

3. Dispositif (1) selon la revendication 2, cependant qu'un flexible de levier de frein gauche (61) et un flexible de levier de frein droit (62) sont reliés respectivement à deux secondes extrémités respectives des cylindres (11, 12, 13, 14, 51, 52, 53, 54) situées en correspondant aux deux extrémités d'entraînement (221, 231, 321, 322, 421, 422), qu'un flexible de frein de roue avant (71) et un flexible de frein de roue arrière (72) sont reliés respectivement à deux secondes extrémités respectives des cylindres (11, 12, 13, 14, 51, 52, 53, 54) situées en correspondant aux deux extrémités passives (222, 232, 331, 332, 431, 432).

4. Dispositif (1) selon la revendication 3, cependant qu'un diamètre du cylindre (11, 12, 13, 71, 52, 53, 54) relié au flexible de frein de roue arrière (72) est plus grand qu'un diamètre du cylindre (11, 12, 13, 14, 51, 52, 53, 54) relié au flexible de frein de roue avant (71).

5. Dispositif (1) selon la revendication 4, cependant que les tiges de piston (113, 123, 133, 143, 513, 523, 533, 543) faisant saillie des cylindres (11, 12, 13, 14, 51, 52, 53, 54) sont situées sur un côté du corps (10, 50), une portion de connexion (15, 16) est formée sur le côté du corps (10, 50) de manière à être reliée au dispositif de transmission (20, 30, 40).

6. Dispositif (1) selon la revendication 5, cependant que le dispositif de transmission (20, 30, 40) a une tige de positionnement (21, 31, 41), un premier lien (22, 32, 42) et un second lien (23, 33, 43), la tige de positionnement (21, 31, 41) s'étend à travers la portion de connexion (15, 16) et est rotative le long d'un axe de celle-ci, le premier et le second lien (22, 32, 42, 23, 33, 43) s'étendent respectivement à travers la tige de positionnement (21, 31, 41), les deux extrémités d'entraînement (221, 231, 321, 322, 421, 422) sont situées sur deux premières extrémités respectives du premier et du second lien (22, 32, 42, 23, 33, 43), les deux extrémités passives (222, 232, 331, 332, 431, 432) sont situées sur deux secondes extrémités respectives du premier et du second lien (22, 32, 42, 23, 33, 43).

7. Dispositif (1) selon la revendication 5, cependant que le dispositif de transmission (20, 30, 40) a une tige de positionnement (21, 31, 41), un premier lien (22, 32, 42) et un second lien (23, 33, 43), une portion centrale de la tige de positionnement (21, 31, 41) est reliée à la portion de connexion (15, 16), deux extrémités de la tige de positionnement (21, 31, 41) sont rotatives autour de la portion de connexion (15, 16), le premier et le second lien (22, 32, 42, 23, 33, 43) sont reliés respectivement aux deux extrémités de la tige de positionnement (21, 31, 41), les deux extrémités d'entraînement (221, 231, 321, 322, 421, 422) sont situées sur deux extrémités du premier lien (22, 32, 42), les deux extrémités passives (222, 232, 331, 332, 431, 432) sont situées sur deux extrémités du second lien (22, 33, 43).

8. Dispositif (1) selon la revendication 4, cependant que les tiges de piston (113, 123, 133, 143, 513, 523, 533, 543) qui sont situées en correspondant aux deux extrémités d'entraînement (221, 231, 321, 322, 421, 422) font saillie d'un premier côté du corps (10, 50), les tiges de piston (113, 123, 133, 143, 513, 523, 533, 543) qui sont situées en correspondant aux deux extrémités passives (222, 232, 331, 332, 431, 432) font saillie d'un second côté du corps (10, 50), le dispositif de transmission (20, 30, 40) s'étend à travers le corps (10, 50) et les deux extrémités d'entraînement (221, 231, 321, 322, 421, 422) et les deux extrémités passives (222, 232, 331, 332, 431, 432) sont situées respectivement sur deux côtés opposés du corps (10, 50).

9. Dispositif (1) selon la revendication 8, cependant que le dispositif de transmission (20, 30, 40) a une tige de positionnement (21, 31, 41), un premier lien (22, 32, 42) et un second lien (23, 33, 43), la tige de positionnement s'étend à travers le corps (10, 50), le premier et le second lien (22, 32, 42, 23, 33, 43) sont reliés respectivement à deux extrémités de la tige de positionnement (21, 31, 41), les deux extrémités d'entraînement (221, 231, 321, 322, 421, 422) sont situées sur deux extrémités du premier lien (22, 32, 42), les deux extrémités passives (222, 232, 331, 332, 431, 432) sont situées sur deux extrémités du second lien (22, 33, 43).

10. Dispositif (1) selon la revendication 3, cependant qu'un diamètre du cylindre (11, 12, 13, 14, 51, 52, 53, 54) relié au flexible de frein de roue arrière (72) est plus grand qu'un diamètre du cylindre (11, 12, 13, 14, 51, 52, 53, 54) relié au flexible de frein de roue avant (71).

11. Dispositif (1) selon la revendication 10, rependant que les tiges de piston (113, 123, 133, 143, 513, 523, 543) faisant saillie des cylindres (11, 12, 13, 14, 51, 52, 53, 54) sont situées sur un côté du corps (10, 50), une portion de connexion (15, 16) est formée sur le côté du corps (10, 50) de manière à être reliée au dispositif de transmission (20, 30, 40).

12. Dispositif (1) selon la revendication 11, cependant que le dispositif de transmission (20, 30, 40) a une tige de positionnement (21, 31, 41), un premier lien (22, 32, 42) et un second lien (23, 33, 43), la tige de positionnement ("1, 31, 41) s'étend à travers la portion de connexion (15, 16) et est rotative le long d'un axe de celle-ci, le premier et le second lien (22, 32, 42, 23, 33, 43) s'étendent respectivement à travers la tige de positionnement (21, 31, 41), les deux extrémités d'entraînement (221, 231, 321, 322, 421, 422) sont situées sur deux premières extrémités respectives du premier et du second lien (22, 32, 42, 23, 33, 43), les deux extrémités passives (222, 232, 331, 332, 431, 432) sont situées sur deux secondes extrémités respectives du premier et du second lien (22, 32, 42, 23, 33, 43).

13. Dispositif (1) selon la revendication 11, cependant que le dispositif de transmission (20, 30, 40) a une tige de positionnement (21, 31, 41), un premier lien (22, 32, 42) et un second lien (23, 33, 43), une portion centrale de la tige de positionnement (21, 31, 41) est reliée à la portion de connexion (15, 16), deux extrémités de la tige de positionnement (21, 31, 41) sont rotatives autour de la portion de connexion (15, 16), le premier et le second lien (22, 32, 42, 23, 33, 43) sont reliés respectivement aux deux extrémités de la tige de positionnement (21, 31, 41), les deux extrémités d'entraînement (221, 231, 321, 322, 421, 422) sont situées sur deux extrémités du premier lien (22, 32, 42), les deux extrémités passives (222, 232, 331, 332, 431, 432) sont situées sur deux extrémités du second lien (23, 33, 43).

14. Dispositif (1) selon la revendication 10, cependant que les tiges de piston (113, 123, 133, 143, 513, 523, 533, 543) qui sont situées en correspondant aux deux extrémités d'entraînement (221, 231, 321, 322, 421, 422) font saillie d'un premier côté du corps (10, 50), les tiges de piston (113, 123, 133, 143, 513, 523, 533, 543) qui sont situées en correspondant aux deux extrémités passives (222, 232, 331, 332, 431, 432) font saillie d'un second côté du corps (10, 50), le dispositif de transmission (20, 30, 40) s'étend à travers le corps (10, 50) et les deux extrémités d'entraînement (221, 231, 321, 322, 421, 422) et les deux extrémités passives (222, 232, 331, 332, 431, 432) sont situées respectivement sur deux côtés opposés du corps (10, 50).

15. Dispositif (1) selon la revendication 14, le dispositif de transmission (20, 30, 40) a une tige de positionnement (21, 31, 41), un premier lien (22, 32, 42) et un second lien (23, 33, 43), la tige de positionnement (21, 31, 41) s'étend à travers le corps (10, 50), le premier et le second lien (22, 32, 42, 23, 33, 43) sont relies respectivement aux deux extrémités de la tige de positionnement (21, 31, 41), les deux extrémités d'entraînement (221, 231, 321, 322, 421, 422) sont situées sur deux extrémités du premier lien (22, 32, 42), les deux extrémités passives (222, 232, 331, 332, 431, 432) sont situées sur deux extrémités du second lien (22, 33, 43).
